**Europäisches Patentamt**

**European Patent Office**

**Office européen des brevets**

(19)

(11) Numéro de publication: **0 005 665**
**A1**

(12) # DEMANDE DE BREVET EUROPEEN

(21) Numéro de dépôt: **79400297.2**

(51) Int. Cl.²: **F 24 J 3/02**

(22) Date de dépôt: **11.05.79**

(30) Priorité: **18.05.78 MC 130478**

(43) Date de publication de la demande:
**28.11.79 Bulletin 79/24**

(84) Etats Contractants Désignés:
**AT BE CH DE FR GB IT LU NL SE**

(71) Demandeur: **Arvai, Tibor**
**31, Avenue Princesse Grace**
**Monte-Carlo(MC)**

(72) Inventeur: **Arvai, Tibor**
**31, Avenue Princesse Grace**
**Monte-Carlo(MC)**

(74) Mandataire: **Corre, Jaques et al,**
**Cabinet Regimbeau J. Corre-Y. Paillet-J.J. Martin-R.**
**Schrimpf 26, Avenue Kléber**
**F-75116 Paris 16(FR)**

(54) **Absorbeur tubulaire pour l'utilisation de l'énergie solaire.**

(57) Absorbeur d'énergie solaire qui comprend un tube extérieur (1) souple et transparent et un tube intérieur (2) souple et noir. Sous les effets combinés de la serre constituée par le tube extérieur et du corps noir constitué par le tube intérieur, de l'eau ou autre fluide caloporteur, qui séjourne ou circule à l'intérieur du tube intérieur, s'échauffe.

*FiG.3*

Croydon Printing Company Ltd.

EP 0 005 665 A1

## ABSORBEUR TUBULAIRE POUR L'UTILISATION DE L'ENERGIE SOLAIRE

La présente invention concerne l'utilisation de l'énergie solaire.

Elle concerne plus précisément un absorbeur de conception particulière permettant d'utiliser cette énergie pour le chauffage d'un fluide caloporteur au moyen de l'énergie solaire.

On connaît de nombreuses structures d'absorbeurs et la présente invention vise à fournir un nouvel absorbeur d'un faible prix de revient qui puisse être placé suivant une multiplicité d'orientations de façon à pouvoir bénéficier de l'énergie solaire sans nécessiter un déplacement de l'absorbeur ou d'un réflecteur au moyen d'une mécanique.

L'absorbeur de la présente invention est constitué par un tube extérieur souple et transparent et par un tube intérieur souple et noir.

On décrira ci-après un exemple de réalisation de la présente invention, en référence aux figures du dessin joint sur lequel :

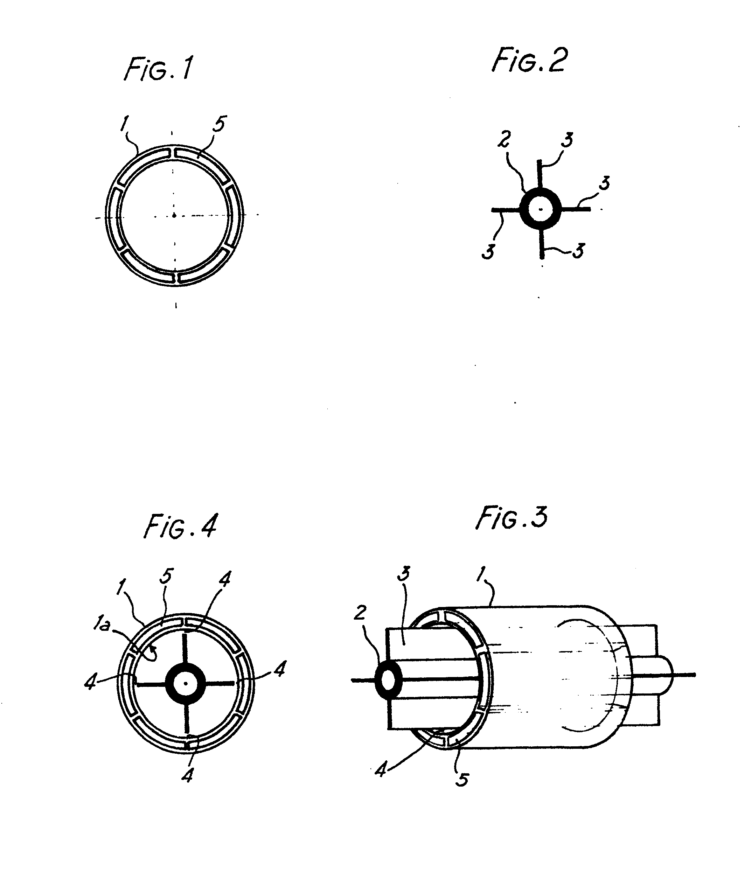

- la figure 1 est une section droite du tube extérieur ;

- la figure 2 est une section droite du tube intérieur ;

- la figure 3 est une perspective d'une fraction de l'absorbeur, et

- la figure 4 est une section droite de l'absorbeur.

Le tube extérieur 1 est un tube en matière plastique souple, transparent mais qui peut cependant dans certaines applications être translucide.

Le mot "transparent" couvre également le cas d'une matière translucide.

Le tube est à paroi simple ou à paroi double, comme dans le cas représenté. La paroi double permet de ménager des creux 5 dans l'épaisseur de la paroi.

Le diamètre du tube extérieur est de préférence de l'ordre de 30 à 40 mm, par exemple de 35 mm environ. Le tube intérieur 2 est un tube souple en matière plastique teintée dans la masse pour constituer un corps noir.

Il est de préférence muni d'ailettes 3 dont le nombre est choisi à volonté.

Le tube a de préférence un diamètre interne de 6 à 8 mm pour le passage du fluide caloporteur.

Pour fabriquer l'absorbeur, on fabrique d'abord le tube intérieur à la boudineuse puis on fabrique le tube extérieur à la boudineuse avec défilement simultané du tube intérieur dans la filière.

En variante, on étire simultanément les deux tubes dans une double filière alimentée par deux pots d'injection.

On peut ainsi fabriquer l'absorbeur en très grandes longueurs avec un faible prix de revient.

Sous les effets combinés de la serre constituée par le tube extérieur et du corps noir constitué par le tube intérieur, le fluide caloporteur, par exemple de l'eau, qui circule ou qui séjourne à l'intérieur du tube intérieur s'échauffe, de façon en soi connue.

La souplesse de l'absorbeur fait que l'utilisateur peut lui donner toute configuration désirée en sorte qu'il existera toujours des parties de l'absorbeur ayant une orientation optimale à un instant donné pour recevoir l'énergie solaire. De plus, la multiplicité des ailettes assure un bon rendement quelle que soit l'orientation.

De préférence, des moyens sont prévus pour que l'air ou autre milieu présent entre les deux tubes ne soit pas cloisonné par les ailettes. Une solution simple consiste à prévoir des ailettes de dimensions telles qu'il existe des intervalles 4 entre les extrémités des ailettes et la face interne la du tube extérieur 1. En variante, les ailettes peuvent comporter des perforations.

Les dimensions des tubes ainsi que la forme de la section des tubes peuvent varier, la préférence étant donnée cependant aux sections circulaires, comme dans le cas représenté.

Les ailettes, qui sont de préférence longitudinales, comme dans le cas représenté, peuvent avoir des formes variées et, par exemple, être ondulées.

Les ailettes peuvent être continues ou discontinues et, dans le cas des réalisations ne comportant pas d'ailettes, il est préféré d'utiliser des moyens d'espacement pour maintenir le tube intérieur à peu près au centre du tube extérieur.

1

<u>REVENDICATIONS</u>

1. Absorbeur pour l'utilisation de l'énergie solaire, caractérisé en ce qu'il comprend un tube extérieur souple et transparent et un tube intérieur souple et noir.

2. Absorbeur selon la revendication 1, caractérisé en ce que le tube extérieur est à double paroi.

3. Absorbeur selon la revendication 1, caractérisé en ce que le tube intérieur comporte des ailettes longitudinales noires.

4. Absorbeur selon la revendication 3, caractérisé en ce qu'il comprend des moyens pour éviter le cloisonnement par les ailettes du milieu compris entre les deux tubes.

5. Absorbeur selon la revendication 4, caractérisé en ce que ces moyens sont un dimensionnement des ailettes tel qu'il existe un espace entre les extrémités des ailettes et la paroi intérieure du tube extérieur.

6. Absorbeur selon l'une des revendications 1 à 5, caractérisé en ce que le tube intérieur est un tube en matière plastique teintée dans la masse.

7. Absorbeur selon l'une des revendications 1 à 6, caractérisé en ce que le tube extérieur a un diamètre compris dans l'intervalle 30 à 40 mm.

8. Absorbeur selon l'une des revendications 1 à 7, caractérisé en ce que le tube intérieur a un diamètre intérieur de 6 à 8 mm.

Fig.1

Fig.2

Fig.4

Fig.3

Office européen
des brevets

**RAPPORT DE RECHERCHE EUROPEENNE**

| **DOCUMENTS CONSIDERES COMME PERTINENTS** | | | CLASSEMENT DE LA DEMANDE (Int. Cl.³) |
|---|---|---|---|
| Catégorie | Citation du document avec indication, en cas de besoin, des parties pertinentes | Revendica-tion concernée | |
| X | FR - A - 2 280 036 (VINCEE) <br> * page 1, ligne 8 à 40; fig. 1a; page 4, ligne 6 à 9, page 1, lignes 34 à 40 * <br> -- | 1-4,6 | F 24 J 3/02 |
| X | DE - U - 7 537 207 (BBC) <br> * document complet * <br> -- | 1,3-6 | |
| P,X | GB - A - 1 515 935 (WALDE) <br> * document complet * <br> -- | 1,3,6 | **DOMAINES TECHNIQUES RECHERCHES (Int. Cl.³)** <br><br> F 24 J 3/00 |
| P,X | GB - A - 1 516 262 (STANDARD TELE-PHONES AND CABLES) <br> * page 1, ligne 77 à 83; fig. 1, position 2a; page 1, ligne 77 à 79 * <br> -- | 1,3,6 | |
| | DE - A - 2 554 095 (KROMER) <br> * document complet * <br> -- | 1,6 | |
| P | FR - A - 2 378 241 (TECULESCU et al.) <br> * page 3, ligne 17 à 34 * <br> -- | 1 | **CATEGORIE DES DOCUMENTS CITES** <br> X: particulièrement pertinent <br> A: arrière-plan technologique <br> O: divulgation non-écrite <br> P: document intercalaire <br> T: théorie ou principe à la base de l'invention |
| A | DE - A - 2 630 133 (POSNANSKY et al.) <br> * document complet * <br> ---- | 1,3,4 6 | E: demande faisant interférence <br> D: document cité dans la demande <br> L: document cité pour d'autres raisons <br><br> &: membre de la même famille, document correspondant |

| X | Le présent rapport de recherche a été établi pour toutes les revendications |
|---|---|

| Lieu de la recherche | Date d'achèvement de la recherche | Examinateur |
|---|---|---|
| Berlin | 27-07-1979 | PIEPER |

OEB Form 1503.1 06.78